# EUROPEAN PATENT APPLICATION

(11) **EP 3 059 035 A1**
(43) Date of publication of application: **24.08.2016**
(21) Application number: 14853437.3
(22) Date of filing: 22.09.2014
(51) Int. Cl.: B23B 29/00, B23Q 11/10

(54) **CUTTING TOOL HOLDER AND CUTTING TOOL**

(30) Priority: 18.10.2013 JP 2013217676
(71) Applicant: NGK Sparkplug Co., Ltd., Nagoya-shi, Aichi 467-8525 (JP)
(72) Inventor: KITAGAWA, Shusuke, Nagoya-shi Aichi 467-8525 (JP)
(74) Representative: Nicholls, Michael John
(86) International application number: PCT/JP2014/004852
(87) International publication number: WO 2015/056406

(57) **Abstract**

In a cutting tool holder having a shaft hole into which a boring bar can be inserted and a screw hole provided at one side of an outer peripheral surface so as to penetrate toward the shaft hole, an ejection port from which a coolant is ejected toward a cutting edge of the boring bar when the boring bar is inserted and fixed by screwing in a setscrew is opened in a front end surface of the holder, and the single holder is allowed to handle a difference in the position of the ejection port between "knife edge supply" and "back surface supply" of the coolant without causing a problem regarding fixing of the boring bar. Screw holes 135 for fixing the inserted boring bar 200 by screwing setscrews 130 thereinto are provided at both sides in a radial direction of the shaft hole 110.

## Description

### TECHNICAL FIELD

The present invention relates to a cutting tool holder that has a shaft hole and is used for inner diameter processing by turning or the like, and a cutting tool formed by inserting a boring bar (a bar-shaped cutting tool having a cutting edge formed at one side of one end thereof or at one side of each of both ends thereof) into the shaft hole of the cutting tool holder and screwing a setscrew into a fixing screw hole, which is provided so as to penetrate from the outer peripheral surface of the cutting tool holder toward the shaft hole, thereby to fix (cramp) the boring bar.

### BACKGROUND ART

Conventionally, of inner diameter processing (hole processing) of a workpiece (to-be cut object), in boring in which the inner peripheral surface of a pilot hole is processed by turning or the like, a cutting tool may be used which is formed by: inserting a boring bar having a cutting edge (knife edge) at one side of a front end thereof into a shaft hole of a sleeve-shaped holder such that a rear end of the boring bar initially enters the shaft hole; and screwing a setscrew into a screw hole provided in the outer peripheral surface of the cutting tool holder (hereinafter, also referred to merely as holder), thereby to fix the boring bar. Such a cutting tool is inserted into a holder mount hole that is provided in a tool rest of a lathe and extends in a main shaft (rotation shaft) direction, the holder of the cutting tool is fixed by screwing a fixing bolt into a screw hole provided in the outer peripheral surface of the tool rest, and the cutting tool is used for processing with the lathe. As such a cutting tool, in the case where the diameter of a hole to be processed is small and the boring bar is thin, there is a cutting tool in which a coolant is not supplied from the outside, and a flow path provided in the holder itself along a direction in which the shaft hole extends is opened in a front end surface of the holder to form an ejection port (discharge port) (Patent Document 1). As shown in FIG. 11, in this cutting tool 400, the ejection port 120 is provided so as to be located at a cutting edge 203 side (flank side) of the boring bar 200 inserted and fixed in the shaft hole 110 of the holder 500, so that a coolant (shown by broken lines) C is ejected (jetted out) from the ejection port 120 under high pressure in a jet flow manner to be poured (sprayed) to the cutting edge 203. In the present application, the coolant means a fluid (cutting fluid or gas) poured to a cutting part for the purpose of lubrication between the cutting edge (knife edge) 203 and a to-be cut object, and cooling of both (temperature rise prevention), etc.

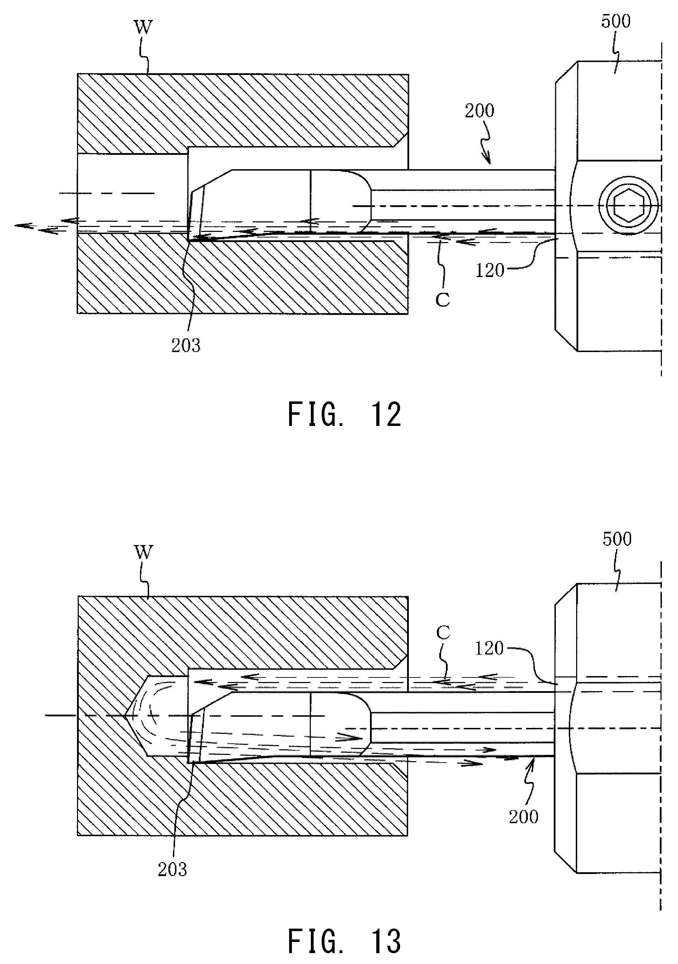

In inner diameter (inner peripheral surface) processing of a hole with such a cutting tool 400, if the inner diameter is small (e.g., Ø10 mm), the gap between the outer peripheral surface of the boring bar 200 and the inner peripheral surface of the hole becomes small due to a demand for ensuring a desired thickness of the bar, and thus dischargeability of swarf deteriorates. Still, as shown in FIG. 12, in processing in the case where a hole in a workpiece W penetrates, swarf generated at the cutting edge 203 can be discharged through an opening of the hole at the deep side together with the coolant C due to ejection of the coolant C from the ejection port 120 at the front end of the holder 500. However, in inner diameter processing of a small-diameter hole that is not a through hole and is a so-called blind hole (a hole closed at the deep side) having a closed end portion at a side opposite to a boring bar entry start (inlet) side, such discharge is not achieved. Thus, in the case of processing of such a blind hole, the dischargeability of swarf extremely decreases, and swarf tends to remain at the deep side of the hole, as compared to the case of processing of a through hole. This causes a problem such as damaging the inner peripheral surface of the hole to cause a decrease in the roughness of a finished surface.

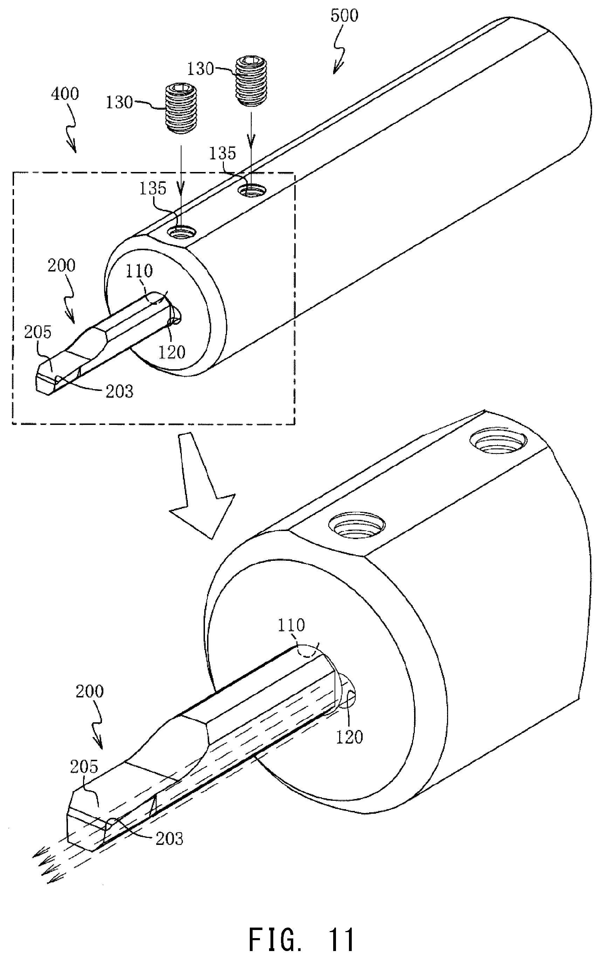

Under such a circumstance, an invention is known in which, in order to enhance the dischargeability of swarf even in such inner diameter processing of a blind hole, the coolant ejection port is opened not at the cutting edge side (flank), but at the side opposite to the cutting edge (at the back surface side), when the cutting tool is seen from the front end side (when the cutting tool is seen from a rotation shaft direction of the workpiece) (Patent Document 2). In this invention, as shown in FIG. 13, the coolant C is ejected from the ejection port 120, which is provided at the side opposite to the cutting edge 203, toward the deep side of the blind hole, and is caused to make a U turn at the deep side of the hole in a way, to be collected, whereby swarf generated at the cutting edge 203 side is discharged along a void such as a swarf discharge groove, provided at the cutting edge 203 side, together with the coolant C to the inlet side of the blind hole. Hereinafter, the coolant supply method in which the coolant is supplied at the cutting edge 203 side as shown in FIGS. 11 and 12 is also referred to as "knife edge supply", and the coolant supply method in which the coolant is supplied at the side opposite to the cutting edge 203 as shown in FIG. 13 is also referred to as "back surface supply".

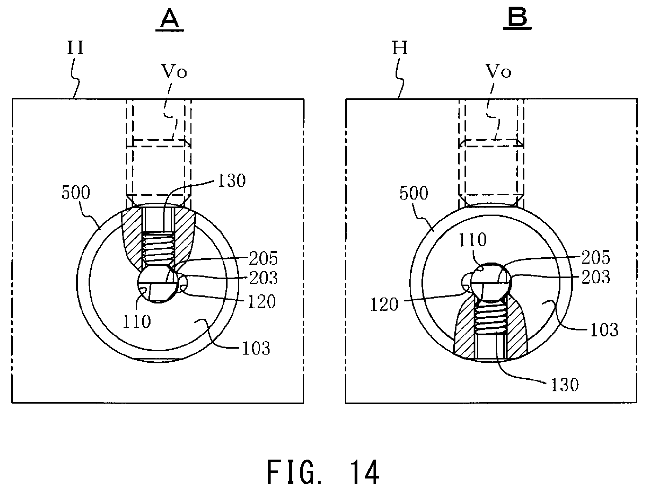

Incidentally, in the cutting tool 400 including the holder 500 shown in FIG. 11 and the boring bar 200 inserted and fixed in the shaft hole 110, such back surface supply (method) is achieved as follows. Specifically, in the cutting tool 400 that performs inner diameter processing of a through hole with the knife edge supply, the coolant ejection port 120 opened in a front end surface 103 of the holder 500 is located at the cutting edge 203 side of the boring bar 200, as shown in FIG. 14-A, when the cutting tool 400 is seen from the front end thereof. In the cutting tool 400, for inner diameter processing of a blind hole, in a set-up operation for changing to the back surface supply, in FIG. 14-A, if the cutting tool 400 is fixed to a tool rest H of a lathe, a fixing bolt Vo in the tool rest H that fixes the holder 500 and setscrews 130 that fix the boring bar 200 to the holder 500 are loosened. Then, for example, only the holder 500 is inverted (rotated by 180 degrees) within a mount hole of the tool rest H without rotating the boring bar 200 within the shaft hole 110, and the fixing bolt Vo and the setscrews 130 are screwed in. By so doing, as shown in FIG. 14-B, the coolant ejection port 120 opened in the front end surface of the holder 500 is located at the side opposite to the cutting edge 203 of the boring bar 200, so that processing with the back surface supply is enabled.

Meanwhile, in the holder 500 of the above conventional cutting tool 400, screw holes 135 into which the setscrews 130 for fixing the boring bar 200 are screwed are provided in one side surface of the outer peripheral surface of a shank portion of the boring bar 200 (see FIGS. 11 and 12). Pressing for fixing the boring bar 200 by means of the setscrews 130 is performed at a surface that faces in the same direction as a rake face 205 of the cutting edge 203. This is because, if such a pressing state is obtained, a major component force of cutting resistance is not received through point support by the tips of the setscrews 130, but can be received by the inner peripheral surface of the shaft hole 110, so that high stability of the cutting edge 203 can be obtained. On the other hand, the above conventional cutting tool 400 employs the knife edge supply in principle, and thus the pressing surface of the boring bar 200 faces in the same direction as the rake face 205 of the cutting edge 203. Therefore, in the knife edge supply, the holes into which the setscrews 130 are screwed are provided at the side of the surface facing in the same direction as the rake face 205 of the cutting edge 203.

### PRIOR ART DOCUMENT

### PATENT DOCUMENT

Patent Document 1: Japanese Utility Model Publication Laid-Open (kokai) No. H05-85535
Patent Document 2: Japanese Patent Publication Laid-Open (kokai) No. 2007-185765

### SUMMARY OF THE INVENTION

### PROBLEM TO BE SOLVED BY THE INVENTION

As is obvious from the above, in the cutting tool 400, when the holder 500 is rotated relative to the boring bar 200 in order to shift to the back surface supply, the setscrews 130 do not press the surface facing in the same direction as the rake face 205 of the cutting edge 203 of the boring bar 200 but press a surface opposite to this surface, as shown in FIG. 14-B. Thus, there is a problem that, in cutting in such a fixed state, the major component force of cutting resistance is received by the tips of the setscrews 130, so that the fixed state is inappropriate.

Furthermore, originally, settings are made in which the holder 500 is fixed to the tool rest H such that, in the set-up operation including such an operation of screwing the setscrews 130 and the like, an operator is allowed to screw the setscrews 130 and the like while seeing the holder 500 from above, in order to be able to visually recognize the setscrews 130 and the like. On the other hand, in changing to the back surface supply as described above, the holder 500 is rotated in the mount hole of the tool rest H by 180 degrees, and thus the operation of screwing the setscrews 130 becomes an operation in which the setscrews 130 are screwed at the lower surface of the holder 500. Therefore, there is also a problem that the operability deteriorates. If the boring bar 200 is rotated by 180 degrees without rotating the holder 500, to be disposed in the reverse direction (configured as a so-called reverse cutting tool), and inner diameter processing is performed, such a problem in the screwing operation is eliminated. However, in this case as well, the setscrews 130 press the surface facing in the direction opposite to the rake face 205 side, and thus the fixed state becomes inappropriate. In addition, in the case of being configured as a reverse cutting tool, a difference occurs in a position such as the edge position of the cutting edge 203. Thus, for example, another program needs to be created in an NC lathe, and there is also a problem that the settings of the NC lathe need to be changed.

For these reasons, conventionally, two types of holders between which the position of the coolant ejection port 120 and the positions of the screw holes 135 are different need to be prepared in order that pressing of the boring bar 200 by the setscrews 130 can be performed at the surface facing in the same direction as the rake face 205 of the cutting edge 203 in any of the "knife edge supply" and the "back surface supply". Therefore, since the number of holders is doubled, there is a remarkable difficulty in terms of stock of the cutting tool and control thereof on a site for such a type of machining, and this causes an increase in the processing cost.

The present invention has been made in view of the above-described problems in the cutting tool for inner diameter processing, and an object of the present invention is to allow a single holder to handle a difference in the position of an ejection port between knife edge supply and back surface supply of a coolant without causing the problems regarding fixing of a boring bar.

### MEANS FOR SOLVING THE PROBLEM

The invention according to claim 1 is a cutting tool holder including: a shaft hole into which a boring bar having a cutting edge at one side of a front end thereof can be inserted; one or a plurality of screw holes for fixing the inserted boring bar by screwing setscrews thereinto, the one or the plurality of screw holes being provided at one side of an outer peripheral surface of the cutting tool holder so as to penetrate toward the shaft hole; and an ejection port formed such that a coolant can be ejected therefrom toward the front end of the boring bar inserted in the shaft hole and fixed by screwing in the setscrews, the ejection port being opened in a front end surface of the cutting tool holder, wherein a screw hole for fixing the inserted boring bar by screwing a setscrew thereinto is provided also at a side opposite to the screw holes in a radial direction of the shaft hole, so as to penetrate from the outer peripheral surface of the cutting tool holder toward the shaft hole.

The invention according to claim 2 is a cutting tool holder according to claim 1, wherein, when the cutting tool holder is seen from the front end surface, the ejection port is provided so as to be present on a straight line that is drawn so as to be perpendicular to a center line of the screw hole and pass through a center of the shaft hole.

The invention according to claim 3 is a cutting tool holder according to claim 1, wherein, when the cutting tool holder is seen from the front end surface, the ejection port is provided so as not to be present on a straight line that is drawn so as to be perpendicular to a center line of the screw hole and pass through a center of the shaft hole.

The invention according to claim 4 is a cutting tool holder according to any one of claims 1 to 3, wherein the ejection port is opened in the front end surface so as to be recessed in an inner peripheral surface of the shaft hole.

The invention according to claim 5 is a cutting tool holder according to any one of claims 1 to 3, wherein the ejection port is opened in the front end surface as an independent hole near the shaft hole via a flow path provided within the cutting tool holder without communicating with the shaft hole.

The invention according to claim 6 is a cutting tool holder according to any one of claims 1 to 5, wherein the setscrews 130 are screwed in all the screw holes.

The invention according to claim 7 is a cutting tool including: the cutting tool holder according to claim 6; a boring bar being inserted into a shaft hole of the cutting tool holder; and the setscrew screwed with the screw hole located at a position where a surface facing in the same direction as a rake face, of the setscrews, thereby to fix the boring bar.

### ADVANTAGEOUS EFFECTS OF THE INVENTION

With the cutting tool holder according to the present invention, because of the above configuration, particular complication of the structure is not caused, and pressing for fixing the boring bar by means of the setscrews can be performed at the surface facing in the same direction as the rake face of the cutting edge, even in any of knife edge supply and back surface supply. Thus, it is not necessary to prepare two types of holders between which the positions of the screw holes are different as in the conventional art, in order to be able to handle a difference in the position of the coolant ejection port. Therefore, a remarkable merit is obtained for the effect on stock of the cutting tool and control thereof. As described above, with the cutting tool holder according to the present invention, because of the above configuration, the following remarkably excellent effects are obtained: there is no problem in pressing by screwing in the setscrews for fixing the boring bar; a convenient holder can be configured as a single holder allowed to handle a change in the position of the ejection port between the knife edge supply and the back surface supply of the coolant; and the processing cost can also be reduced. In the present invention, the ejection port is formed so as to be opened in the front end surface of the holder itself and only needs to allow a selection to be made between the knife edge supply and the back surface supply. Therefore, the ejection port itself suffices to be opened as one port in the front end surface and at one side of the shaft hole, but a plurality of ports may be opened.

As recited in claim 2, the ejection port is preferably provided such that the center thereof is present on a straight line that is drawn so as to be perpendicular to the center line of the screw hole and pass through the center of the shaft hole, when the holder is seen from the front end surface. However, as recited in claim 3, the ejection port may be provided so as not to be present on the straight line that is drawn so as to perpendicular to the center line of the screw hole and pass through the center of the shaft hole, when the holder is seen form the front end surface.

In the present invention, the ejection port may be recessed in the inner peripheral surface of the shaft hole as recited in claim 4, or may be provided as a separate hole independently of the shaft hole as recited in claim 5. If the ejection port is provided as recited in claim 4, the ejection port can be recessed in the inner peripheral surface of the shaft hole so as to be cut thereinto. Thus, it is easy to form the ejection port, and the coolant can be effectively supplied even when the hole diameter is small and the gap between the inner peripheral surface of the hole and the outer peripheral surface of the boring bar is narrow. On the other hand, if the ejection port is provided in this manner, there is a problem regarding airtightness such as a possibility that the coolant flows around into the gap between the inner peripheral surface of the shaft hole and the outer peripheral surface of the boring bar, or the coolant leaks through the screwed face of the setscrew. In contrast, in the invention according to claim 5, such a problem can be eliminated.

In the holder of the present invention, as in the invention according to claim 6, the setscrews may be screwed in all the screw holes. This is because the setscrews are less likely to be scattered or lost, and the cutting tool can be promptly adapted to any of the knife edge supply or the back surface supply.

### BRIEF DESCRIPTION OF THE DRAWINGS

[FIG. 1] Partially cross-sectional view, passing through screw holes, of an embodiment of the cutting tool holder of the present invention, an enlarged view of a main part thereof, and cross-sectional views of respective parts.
[FIG. 2] Enlarged view of a front end surface of the holder in FIG. 1.
[FIG. 3] Cross-sectional view of the holder in FIG. 1, taken along S4-S4.
[FIG. 4] Exploded perspective view of a cutting tool including the holder in FIG. 1.
[FIG. 5] A is a cross-sectional view of a cutting tool formed by inserting a boring bar into the holder in FIG. 1 and fixing the boring bar with "knife edge supply", and B is a view as seen from a rake face side passing through an axial line of the cutting tool, and an enlarged view of a main part thereof.
[FIG. 6] Enlarged view of the cutting tool in FIG. 5, as seen from a front end thereof.
[FIG. 7] A is a partially cross-sectional view as seen from the front end side when the cutting tool with the "knife edge supply" in FIG. 5 is fixed to a tool rest, and B is a partially cross-sectional view when a shift to "back surface supply" is made in A.
[FIG. 8] Diagram illustrating another example in which an ejection port is changed in FIG. 6.
[FIG. 9] Diagram illustrating another example in which the ejection port is changed in FIG. 6.
[FIG. 10] Diagram illustrating modifications in which the ejection port is changed in FIGS. 2 and 8.
[FIG. 11] Explanatory perspective view showing an example of a conventional cutting tool for inner diameter processing, and an enlarged view of a main part thereof.
[FIG. 12] Explanatory plan cross-sectional view as seen from the rake face side in a state where inner diameter processing of a through hole is performed with knife edge supply.
[FIG. 13] Explanatory plan cross-sectional view as seen from the rake face side in a state where inner diameter processing of a blind hole is performed with back surface supply.
[FIG. 14] A is a partially cross-sectional view as seen from the front end side in a state where the cutting tool in FIG. 11 is fixed to a tool rest with "knife edge supply", and B is a diagram when a shift from the "knife edge supply" to "back surface supply" is made in A.

### MODES FOR CARRYING OUT THE INVENTION

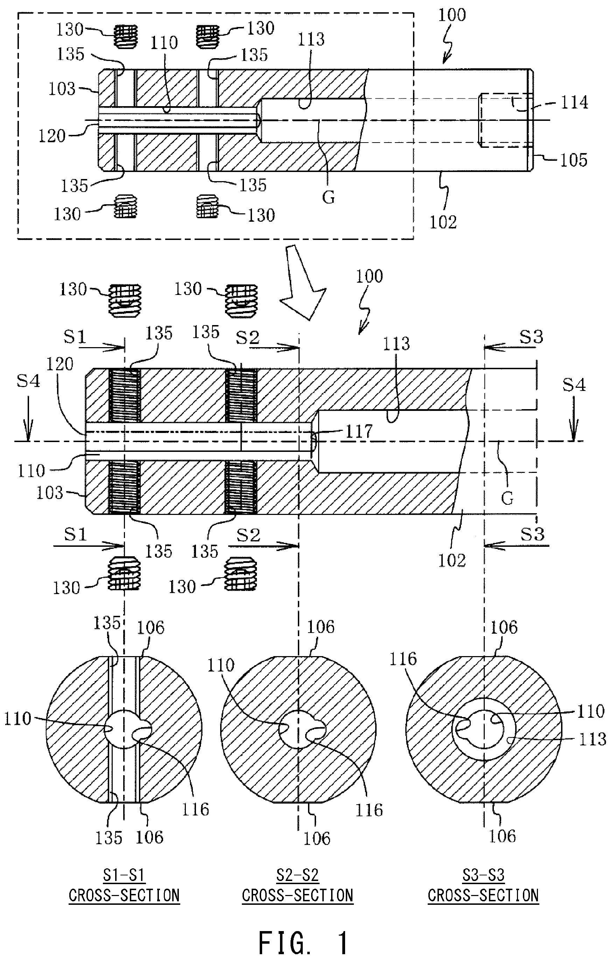

An embodiment of the cutting tool holder of the present invention will be described in detail based on FIGS. 1 to 4. In the drawings, reference numeral 100 denotes a holder that has, in a round bar (cylindrical body), a hole having a circular inner peripheral surface in a transverse cross-section thereof and coaxial with a central axis G of the round bar. However, in this example, of this hole, a part from a front end surface 103 of the holder 100 to a middle position before a rear end (surface) 105 is formed as a shaft hole 110 for inserting a boring bar therein, and a part from the middle position to the rear end 105 is formed as a flow path 113, for coolant supply, having a larger diameter than the shaft hole 110. A thread (tapered thread for pipe) 114 is provided as a coolant supply pipe connection portion at an end portion opened in the rear end surface 105 of the holder 100, of the inner peripheral surface of the flow path 113.

Meanwhile, in an outer peripheral surface 102 of the holder 100, flat surfaces (even surfaces) 106 having a certain width are formed at both sides in the same manner so as to be parallel to each other and extend in a front-rear direction. In this example, in a portion of each flat surface 106 which portion is present at the front end surface 103 side of the holder 100 and corresponds to the above-described shaft hole 110, screw holes 135 for screwing fixing setscrews 130 therein are provided so as to penetrate in a radial direction of the holder 100 toward the shaft hole 110. In this example, the screw holes 135 are provided at two locations on each side spaced apart from each other in the front-rear direction, namely, at four locations in total, and each screw hole 135 is set such that the setscrew 130 (e.g., a setscrew 130 with a hexagon socket) can be screwed thereinto. Each flat surface 106 is a surface pressed by screwing in a fixing bolt after a cutting tool including the holder 100 is inserted into a mount hole of a tool rest of a lathe. That is, the holder 100 has a transverse cross-section that can rotate in a slide contact state within a mount (hole) having a circular transverse cross-section in the tool rest of the lathe, and is configured such that the rotation is stopped when the holder 100 is fixed.

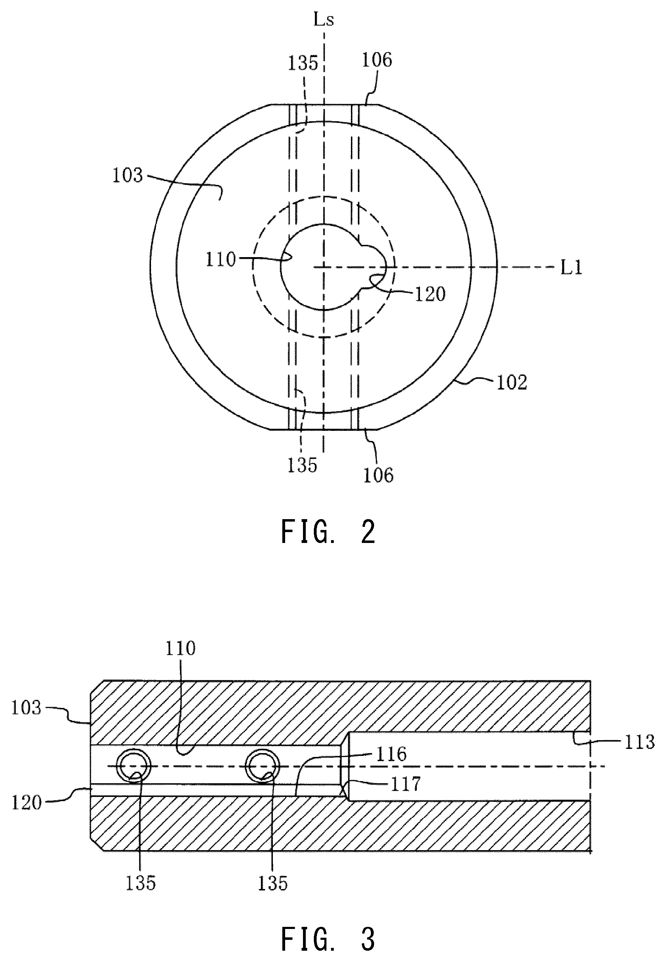

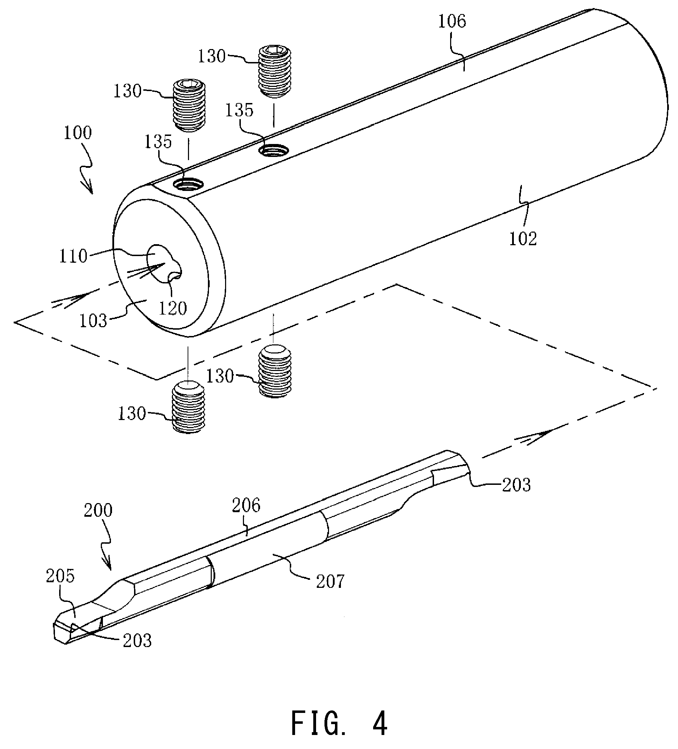

Meanwhile, the shaft hole 110 is formed as a circular hole into which an intermediate portion (shank portion) 207 between cutting edges 203 provided at one sides of front and rear ends, respectively, as in a boring bar 200 shown in the lower drawing in FIG. 4 can be inserted. The boring bar 200 shown in FIG. 4 has rake faces 205 in side surfaces that are opposite to each other and at the front and rear ends. The inner diameter of the shaft hole 110 is sized so as to allow the intermediate portion 207 to rotate about an axial line thereof in a slide contact state with a minute gap. In this example, a recessed groove 116 is recessed in the inner peripheral surface of the shaft hole 110 and on a straight line L1 that is drawn so as to be perpendicular to an axial line (center line) Ls of the screw hole 135 for screwing the setscrew 130 therein and pass through the center of the shaft hole 110, when the holder 100 is seen from the front end surface 103 side (see FIG. 2). The recessed groove 116 extends in the front-rear direction over the overall length of the shaft hole 110 (see each transverse cross-sectional view in FIG. 1, and FIG. 3). In addition, when the holder 100 is seen from the front end surface 103, that is, when the holder 100 is cut along a cross-section perpendicular to the axial line G of the shaft hole 110, the recessed groove 116 is formed as a recess in a circular arc shape (crescent shape) and provided such that the center of the recessed groove 116 in a groove width direction thereof is present on the straight line L1. The center of the recessed groove 116 in the groove width direction thereof may not be present on the straight line L1. A rear end 117 of the recessed groove 116 is connected to the flow path 113 for coolant supply at the rear side, and a front end of the recessed groove 116 is opened in the front end surface 103 of the holder 100 to form an ejection port 120.

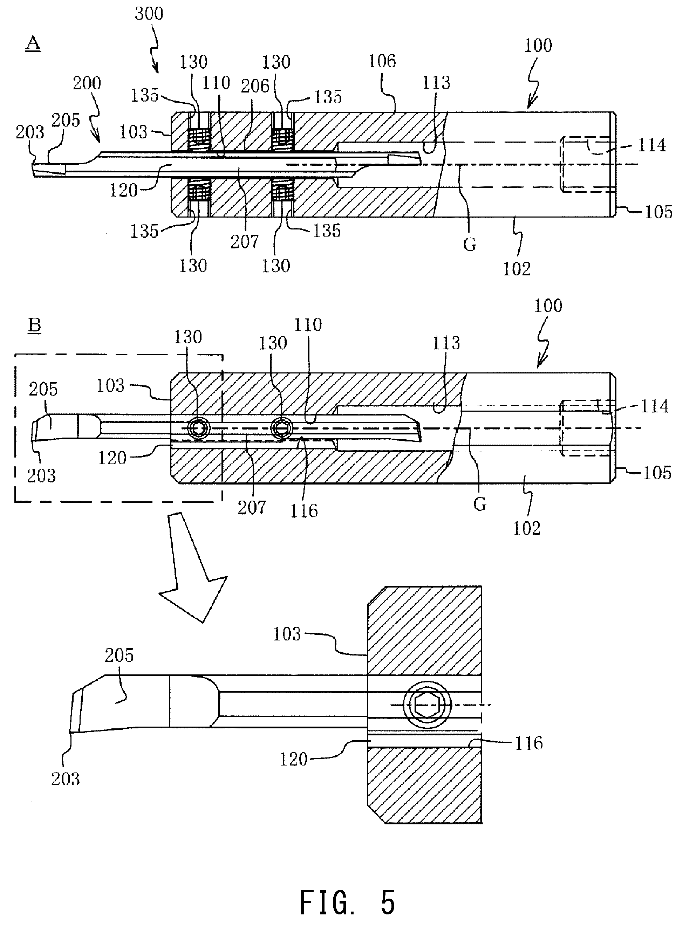

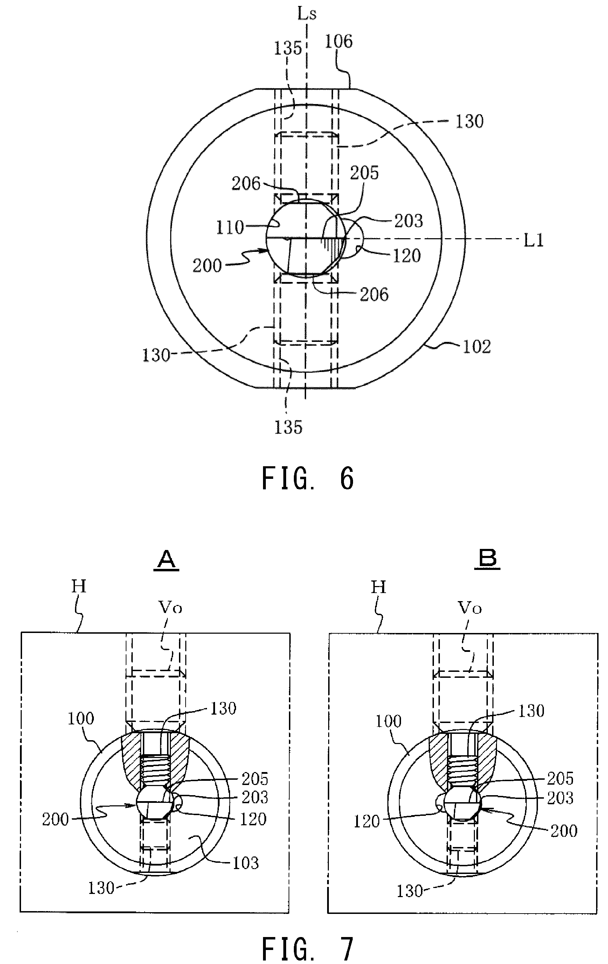

In such a holder 100 of this example, the predetermined boring bar 200, as shown in the lower drawing in FIG. 4, corresponding to the diameter of the shaft hole 110 is inserted into the shaft hole 110 by a predetermined amount. Of the intermediate portion (shank portion) 207, surfaces facing in the same direction as the rake faces 205 of the cutting edges 203 are pressed by the setscrews 130 screwed into the screw holes 135, so that the boring bar 200 is fixed. By so doing, a cutting tool 300 for inner diameter processing as shown in FIGS. 5 and 6 is obtained. In this case, in the case of making the cutting tool 300 into a cutting tool with "knife edge supply", as shown in FIG. 6, when seen from the front end surface 103 of the holder 100, the cutting edge 203 at the one side of the front end of the boring bar 200 becomes the coolant ejection port 120 side. Thus, in this case, cramping may be performed by screwing in, with predetermined torque, the setscrews 130 present at the side of the surface facing in the same direction as the rake face 205 of this cutting edge 203 (the upper setscrews 130 in FIGS. 5-A and 6). Prior to this screwing, the setscrews 130 at the opposite side may be moderately screwed back such that the tips thereof do not project from the inner peripheral surface of the shaft hole 110. In the intermediate portion 207 (shank portion) of the boring bar 200 fixed by means of the setscrews 130, a flat surface 206 having a predetermined width and extending in the front-rear direction is formed in a surface facing in the same direction as the rake face 205, similarly as in the holder 100, such that the rake face 205 can be recognized and fixing by means of the setscrews 130 can be stably performed without rotation. In this regard, since the shown boring bar 200 is of a type having the cutting edges 203 at the front and rear ends and at the different sides from each other, the flat surfaces 206 are provided at both sides on the outer peripheral surface based on a circular cross-section so as to be parallel to each other, similarly as in the holder 100.

Thus, in the cutting tool 300, if a coolant supply pipe is connected to the connection portion (thread for pipe) 114 of the rear end 105 of the flow path 113 for coolant supply at the rear end surface 105 of the holder 100 and a coolant (e.g., a cutting fluid) is supplied under high pressure, the coolant is poured as a jet flow from the ejection port 120, which is opened in the front end surface 103 of the holder 100, toward the cutting edge 203. Accordingly, when the cutting tool 300 of this example is inserted into a mount hole of a tool rest H of a predetermined lathe with the rake face 205 facing upward and is fixed by means of a fixing bolt Vo as shown in FIG. 7-A, desired inner diameter processing (inner diameter processing of a through hole) with the "knife edge supply" can be performed.

Meanwhile, in such a cutting tool 300 using the holder 100 of this case, at the time of set-up for changing the cutting tool 300 to "back surface supply" in order to allow for inner diameter processing of a blind hole, the fixing bolt Vo fixing the holder 100 in the tool rest H and all the setscrews 130 screwed into the holder 100 are screwed back to be loosened, and, for example, the holder 100 is inverted (by 180 degrees) around the boring bar 200 while the attitude of the boring bar 200 is maintained as it is. By so doing, as shown in FIG. 7-B, the ejection port 120 comes to the position for the "back surface supply". Therefore, at that position, similarly to the above, the setscrews 130 are screwed in, and the fixing bolt Vo is screwed in, so that inner diameter processing with the back surface supply is enabled to be performed.

That is, as described above, for example, when the holder 100 is inverted about the axial line of the boring bar 200 without rotating the boring bar 200, the coolant ejection port 120 is located at the side opposite to the cutting edge 203 side. At this time, the setscrews 130 that are present at the rake face 205 side of the boring bar 200 and have not played a role of fixing before the inversion come to the same position as the setscrews 130 that have performed fixing at the surface facing in the same direction as the rake face 205 before the inversion. Therefore, the boring bar 200 can be cramped again as if by screwing again the setscrews 130 that have played a role of fixing before the inversion. As described above, with the holder 100 according to this example, even in a use mode of the back surface supply, instability of fixing of the boring bar 200 by means of the setscrews 130 is not caused, and the screwing operation can be performed in an attitude in which the operator looks down from above similarly as described above. Thus, for the operator, the operation can be simplified and sped up. As a matter of course, also in the case of returning to the knife edge supply later, the operation can be performed in the exactly same manner. The operation of changing between the knife edge supply and the back surface supply can be performed naturally after the cutting tool 300 is removed from the tool rest H. In this case as well, the same advantageous effects can be obviously obtained.

In the above example, the ejection port 120 is provided by recessing the inner peripheral surface of the shaft hole 110 and the shape of the ejection port 120 is a circular arc shape (crescent shape). Thus, in any of the knife edge supply and the back surface supply, the coolant can be supplied toward the front end of the boring bar 200 along the boring bar 200, efficiently even if the gap with the inner peripheral surface of a machined hole is small. However, even when the ejection port 120 is provided (opened) by recessing the inner peripheral surface of the shaft hole 110, the flow path cross-section of the ejection port 120 is not limited to the circular arc shape (crescent shape), and the ejection port 120 may have an appropriate cross-sectional shape such as a rectangular shape. In addition, in the above example, the case where the coolant is supplied from the rear end surface 105 of the holder 100 via the flow path 113 provided coaxially with the shaft hole 110 has been described. However, for supply of the coolant from a pressure feed source (pump), a connection port (screwing portion) for a supply pipe may be provided, for example, at a portion that does not interfere with fixing to the tool rest and is close to the front end, of the outer peripheral surface 102 of the holder 100, and the flow path 113 may be provided so as to be connected to the ejection port 120.

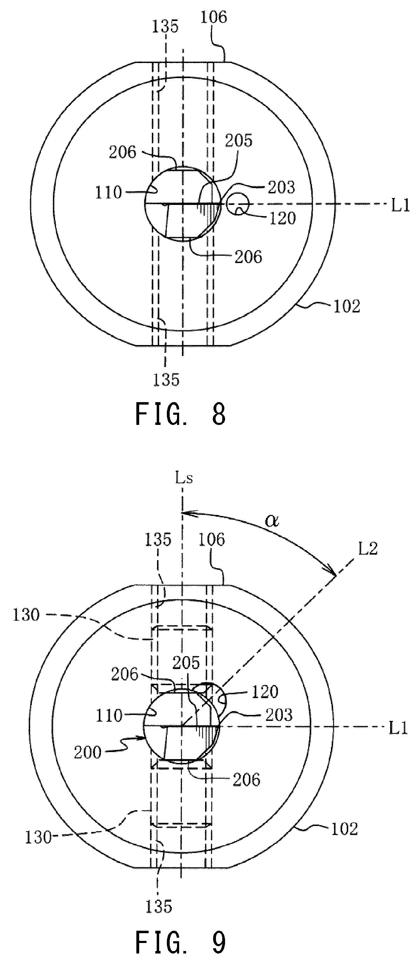

As shown in FIG. 8, the ejection port 120 may be opened in the front end surface 103 of the holder 100 and at a position away from the shaft hole 110 even by a small distance, and may be provided as an independent hole via a flow path (not shown) provided without communicating with the shaft hole 110. That is, in this case, a flow path for coolant supply may be formed within the holder 100 in a tunnel shape and independently of the shaft hole 110 so as to be connected to the ejection port 120, and a connection port for supply of the coolant from the pressure feed source may be provided in the rear end surface 105 or the outer peripheral surface of the holder 100. With this configuration, the coolant can be ejected as an independent jet flow from the ejection port 120 as also described above, and thus a problem such as leak of the coolant through the screwed faces of the setscrews 130 (the gaps between the threads of the screw holes 135 and the threads of the setscrews 130) can be avoided. Even if a hole to be machined has a small diameter, this configuration is effective at a relatively large hole.

The cutting tool holder 100 of the above example is based on a round bar having a circular transverse cross-section and provided with the flat surfaces 106, which are parallel to each other, on the outer peripheral surface. The shape of the outer peripheral surface of the cutting tool holder 100 itself may be appropriate one. The outer peripheral surface may be, for example, smaller in diameter at a portion close to the front end and connected to the front end surface 103 than at the other portion continuous rearward therefrom (a portion mounted to the tool rest). In addition, the shaft hole 110 only needs to allow the position of the ejection port 120 to be selectable from a position for the knife edge supply or a position for the back surface supply in accordance with the boring bar. Therefore, the transverse cross-sectional shape of the shaft hole 110 is also not limited to a circle.

In the above example, the case has been described in which the center of the recessed groove 116, connected to the ejection port 120, in the groove width direction thereof when the holder 100 is seen from the front end surface 103 side (see FIGS. 2 and 6) is present on the straight line L1 that is drawn so as to be perpendicular to the axial line (center line) Ls of the screw hole 135 for screwing the setscrew 130 therein and pass through the center of the shaft hole 110. However, the position of the center may be changed as follows. Specifically, in the above example, the case has been described in which, when the holder 100 is seen from the front end surface 103 side (see FIGS. 2 and 6), the ejection port 120 is present on the straight line L1 that is drawn so as to be perpendicular to the axial line (center line) Ls of the screw hole 135 and pass through the center of the shaft hole 110. However, in the present invention, as shown in FIG. 9, the ejection port 120 may not be present on the straight line L1 that is drawn so as to be perpendicular to the axial line (center line) Ls of the screw hole 135 and pass through the center of the shaft hole 110.

In FIG. 9, the ejection port 120 and the center of the recessed groove 116 in the groove width direction thereof are located on a straight line L2 that is drawn so as to pass through the center of the shaft hole 110 and be inclined at an inclination angle α (e.g., 45 degrees) relative to the axial line (center line) Ls of the screw hole 13 when the holder 100 is seen from the front end surface 103 side. In this case, as shown in FIG. 9, when the holder 100 is seen from the front end surface 103 side, the ejection port 120 is not present on the straight line L1 that is drawn so as to be perpendicular to the axial line (center line) Ls of the screw hole 135 and pass through the center of the shaft hole 110. FIG. 9 illustrates the "knife edge supply". In this case, for example, the "knife edge supply" is achieved due to the positional relationship between the ejection port 120 and the fixed boring bar 200, and the case where the coolant is supplied to the cutting edge 203 as the "knife edge supply" closer to the rake face 205 is shown.

Even with the "knife edge supply", this is suitable for the case where supply of the coolant to the rake face 205 side in a large amount is demanded. In the holder 100, in the case of shifting to the "back surface supply", even at the back surface side, the ejection port 120 is located in a portion close to the side opposite to the rake face 205. Thus, in processing of a blind hole, when the coolant makes a U turn to be returned, an effect of causing generated swarf to rise from the rake face 205 by the flow of the coolant is obtained. Thus, the dischargeability of swarf also can be enhanced depending on a processing condition. That is, even in any of the "knife edge supply" and the "back surface supply", a portion surrounding the shaft hole 110 at which portion the coolant should be ejected to the front end side depends on a processing condition. In accordance with this, the position of the ejection port 120 (the position of the ejection port around the shaft hole 110 relative to the axial line of the screw hole 135) may be set, and, therefore, the above angle α may be set as appropriate. In FIG. 9, the case has been described in which, in the above example, the ejection port 120 is recessed in the inner peripheral surface of the shaft hole 110 and the shape of the ejection port 120 is a circular arc shape (crescent shape). This configuration is similarly applicable to the case where the ejection port 120 is opened in the front end surface 103 of the holder 100 and independently at a position away from the shaft hole 110 as shown in FIG. 8.

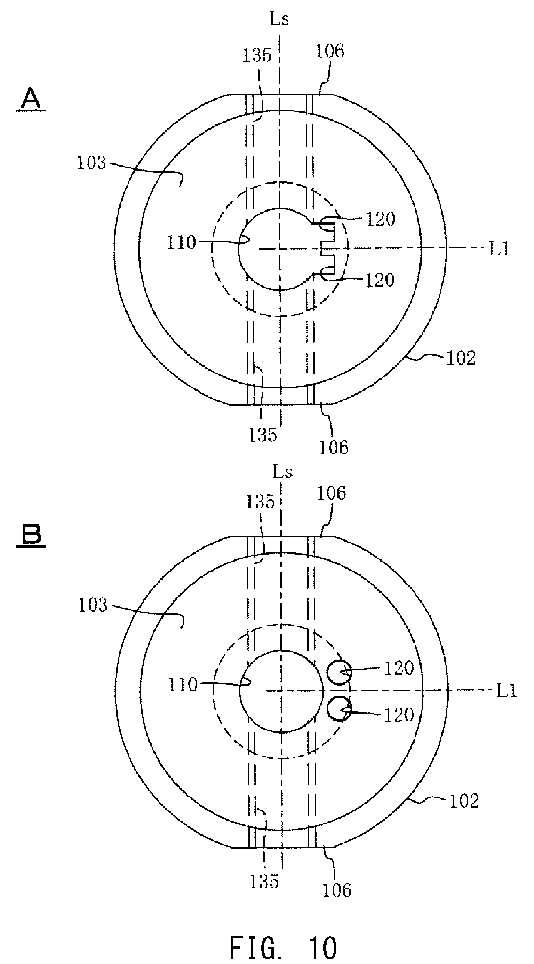

In the above example, when seen from the front end surface 103 of the holder 100, the ejection port 120, which should achieve either the "knife edge supply" or the "back surface supply", is composed of a single port. However, for example, even in the case where the ejection port 120 is provided in the inner peripheral surface of the shaft hole 110, the ejection port 120 may be divided into two or more ports, and may be divided into two ejection ports 120 as shown in FIG. 10-A. In addition, the same applies to the case where the ejection port 120 is an independent hole, as shown in FIG. 10-B. That is, in the present invention, as long as the ejection port is opened in the front end surface of the holder itself and at one side of the shaft hole, even if the ejection port is composed of a plurality of ejection ports or an ejection port group, either the "knife edge supply" or the "back surface supply" may be selectable at the plurality of ejection ports. In any of FIGS. 10-A and 10-B, the two divided ejection ports (two ejection ports) 120 are provided such that the straight line L1, which is drawn so as to be perpendicular to the center line Ls of the screw hole 135 and pass through the center of the shaft hole 110 when the holder is seen from the front end surface 103, is present between the two ejection ports 120. Thus, the two divided ejection ports 120 are not present on the straight line L1. Meanwhile, in any of FIGS. 10-A and 10-B, obviously, either of the two divided ejection ports (two ejection ports) 120 may be provided so as to be present on (overlap) the straight line L1. The ejection port may be composed of three or more ports.

Regarding the holder according to the present invention, as long as the boring bar can be fixed at a fixed part thereof on the surface facing in the same direction as the rake face side, by means of the setscrews, and the single holder can handle the difference in the position of the ejection port between the "knife edge supply" and the "back surface supply" of the coolant, there are no limitations on the other structure and shape of the holder itself. Regarding fixing of the boring bar, the "surface facing in the same direction as the rake face" at which surface the fixing by means of the setscrews is performed includes, in addition to the surface parallel to the rake face, a surface that is not parallel to the rake face and has an inclination angle.

### DESCRIPTION OF REFERENCE NUMERALS

- 100:: cutting tool holder
- 102:: outer peripheral surface of holder
- 103:: front end surface of holder
- 110:: shaft hole of holder
- 120:: ejection port of holder
- 130:: setscrew
- 135:: screw hole of holder
- 200:: boring bar
- 203:: cutting edge
- 205:: rake face
- 300:: cutting tool

## Claims

1. A cutting tool holder comprising:
a shaft hole into which a boring bar having a cutting edge at one side of a front end thereof can be inserted;
one or a plurality of screw holes for fixing the inserted boring bar by screwing setscrews thereinto, the one or the plurality of screw holes being provided at one side of an outer peripheral surface of the cutting tool holder so as to penetrate toward the shaft hole; and
an ejection port formed such that a coolant can be ejected therefrom toward the front end of the boring bar inserted in the shaft hole and fixed by screwing in the setscrews, the ejection port being opened in a front end surface of the cutting tool holder, wherein
a screw hole for fixing the inserted boring bar by screwing a setscrew thereinto is provided also at a side opposite to the screw holes in a radial direction of the shaft hole, so as to penetrate from the outer peripheral surface of the cutting tool holder toward the shaft hole.

2. A cutting tool holder according to claim 1, wherein, when the cutting tool holder is seen from the front end surface, the ejection port is provided so as to be present on a straight line that is drawn so as to be perpendicular to a center line of the screw hole and pass through a center of the shaft hole.

3. A cutting tool holder according to claim 1, wherein, when the cutting tool holder is seen from the front end surface, the ejection port is provided so as not to be present on a straight line that is drawn so as to be perpendicular to a center line of the screw hole and pass through a center of the shaft hole.

4. A cutting tool holder according to any one of claims 1 to 3, wherein the ejection port is opened in the front end surface so as to be recessed in an inner peripheral surface of the shaft hole.

5. A cutting tool holder according to any one of claims 1 to 3, wherein the ejection port is opened in the front end surface as an independent hole near the shaft hole via a flow path provided within the cutting tool holder without communicating with the shaft hole.

6. A cutting tool holder according to any one of claims 1 to 5, wherein the setscrews are screwed in all the screw holes.

7. A cutting tool comprising:
the cutting tool holder according to claim 6;
a boring bar being inserted into a shaft hole of the cutting tool holder; and
the setscrew screwed in the screw hole located at a position where a surface facing in the same direction as a rake face, of the setscrews, thereby to fix the boring bar.
